# EUROPÄISCHE PATENTSCHRIFT

(11) **EP 3 164 305 B1**
(45) Veröffentlichungstag und Bekanntmachung des Hinweises auf die Patenterteilung: **14.11.2018**
(21) Anmeldenummer: 15735901.9
(22) Anmeldetag: 01.07.2015
(51) Int. Cl.: B60T 8/173

(54) **VERFAHREN ZUR VERMEIDUNG VON FEHLANREGELUNGEN EINES SCHLUPFREGELSYSTEMS EINES BREMSSYSTEMS EINES FAHRZEUGS**
METHOD FOR AVOIDING FALSE EXCITATIONS OF A SLIP CONTROL SYSTEM OF A BRAKE SYSTEM OF A VEHICLE
PROCÉDÉ POUR ÉVITER DES RÉGLAGES DÉFECTUEUX D'UN SYSTÈME DE RÉGULATION DU PATINAGE D'UN SYSTÈME DE FREINAGE D'UN VÉHICULE

(30) Priorität: 03.07.2014 DE 102014212984
(43) Veröffentlichungstag der Anmeldung: 10.05.2017
(73) Patentinhaber: Continental Teves AG & Co. OHG, 60488 Frankfurt am Main (DE)
(72) Erfinder: KASTEN, Manuel, 65795 Hattersheim (DE); KERBER, Henning, 64289 Darmstadt (DE); MÜLLER, Jochen, 35041 Marburg (DE); ROSZYK, Mario, 61273 Wehrheim (DE)
(86) Internationale Anmeldenummer: PCT/EP2015/064973
(87) Internationale Veröffentlichungsnummer: WO 2016/001296

(56) Entgegenhaltungen:
- EP-A2- 1 055 575
- DE-A1- 4 018 991
- DE-A1- 4 025 045
- US-A- 5 567 024
- US-A- 5 952 564
- US-A- 5 964 509
- US-A- 5 964 509
- US-A1- 2002 002 435

## Beschreibung

Die Erfindung betrifft ein Verfahren zur Vermeidung von Fehlanregelungen eines Schlupfregelsystems eines Bremssystems eines Fahrzeugs, bei welchem an wenigstens einem Fahrzeugrad eine Schlupfregelung durchführbar ist.

Es gibt Situationen, in denen es zu Fehlanregelungen eines Schlupfregelsystems kommen kann, wenn bspw. die Schwingungen in einem Radgeschwindigkeitssignal eines Fahrzeugrades fälschlicherweise als Schlupf interpretiert werden und das Schlupfregelsystem hierauf mit einer Schlupfregelung reagiert.

Aus der US 5 964 509 A ist ein Verfahren zur Verbesserung einer Schlupfregelung bekannt, bei dem der Einfluss einer Schwingung der Antriebswellen während eines Bremsvorgangs unterdrückt wird.

Solche Radschwingungen können aber auch bspw. aufgrund einer Relativbewegung zwischen der eine Schwingungsdämpfung aufweisenden Radaufhängung und dem Fahrzeugaufbau entstehen, und zwar nicht nur aufgrund eines vertikal verlaufenden Federweges, sondern auch aufgrund eines Federweges in Fahrzeuglängsrichtung. Wenn das Fahrzeugrad sich in Fahrzeuglängsrichtung bewegt, so ändert sich aufgrund der Relativbewegung gegenüber dem Fahrzeugaufbau die detektierte Radgeschwindigkeit. Diese Differenz zwischen der Radgeschwindigkeit und der Fahrzeuggeschwindigkeit kann zu einem fälschlicherweise detektierten Schlupf führen. Ferner wurde festgestellt, dass eine solche Schwingung des Fahrzeugrades in Fahrzeuglängsrichtung durch eine schnelle Modulation des Bremsdruckes an der Radbremse des Fahrzeugrades initiiert werden kann. Daher muss davon ausgegangen werden, dass ein schneller Bremsdruckanstieg zu Schlupf führen. Ferner wurde festgestellt, dass eine solche Schwingung des Fahrzeugrades in Fahrzeuglängsrichtung durch eine schnelle Modulation des Bremsdruckes an der Radbremse des Fahrzeugrades initiiert werden kann. Daher muss davon ausgegangen werden, dass ein schneller Bremsdruckanstieg zu Schwingungen des Radgeschwindigkeitssignals führen können und daher die Gefahr besteht, dass die Schlupfregelung einen solchen Radzustand fälschlicherweise als Schlupf detektiert.

Daher muss ein solches Schlupfregelsystem einen tatsächlichen Schlupf erkennen und dessen Wert möglichst genau ermitteln.

So gibt es bei einer Schlupfregelung den Konflikt, dass diese einerseits bereits bei einem geringen Schlupf sensibel einsetzen soll, um tiefe Schlupfeinläufe, gefolgt von tiefen Druckabbauphasen, und einen inhomogenen Verzögerungsverlauf zu vermeiden, jedoch andererseits die Schlupfregelung nicht fehlausgelöst werden darf, wenn bspw. der von dem Schlupfregelsystem detektierte Schlupf lediglich das Ergebnis einer Radschwingung ist und dieser detektierte "Schlupf" auch ohne eine Schlupfregelung abklingen würde. Der Konflikt liegt darin, dass das erste Ziel einer sensiblen Schlupfregelung sensible Schlupf-Regelschwellen verlangt, wohingegen das zweite Ziel einen "Phantomschlupf" zu vermeiden, unsensible Schlupf-Regelschwellen erfordern würde.

Die Aufgabe der Erfindung besteht darin, ein eingangs genanntes Verfahren zu schaffen, welches die genannten Nachteile, also eine Fehlanregelung bei fälschlicherweise detektierten Schlupf, der insbesondere aufgrund einer bremsinduzierten Schwingung detektiert wird, vermeidet.

Diese Aufgabe wird gelöst durch ein Verfahren mit den Merkmalen des Patentanspruchs 1.

Dieses Verfahren zur Vermeidung von Fehlanregelungen eines Schlupfregelsystems eines Bremssystems eines Fahrzeugs, bei welchem an wenigstens einem Fahrzeugrad eine Schlupfregelung durchführbar ist, umfasst erfindungsgemäß folgende Verfahrensschritte:
a) Überwachen eines Radgeschwindigkeitssignals für eine vorgegebene erste Überwachungszeitdauer hinsichtlich des Beginns einer negativen Halbwelle einer dem Fahrzeugrad aufgeprägten Schwingung, falls ein durch einen Bremsantritt initiierter Bremsdruckgradient über eine vorgegebene Schwelle ansteigt,
b) Überwachen des Radgeschwindigkeitssignals hinsichtlich eines Wendepunktes eines aus dem Radgeschwindigkeitssignals abgeleiteten Rucksignals und des Beginns einer die Wiederbeschleunigung anzeigenden, aus dem Radgeschwindigkeitssignal abgeleiteten Beschleunigungssignals während einer vorgegebenen, an den Zeitpunkt des Beginns einer detektierten negativen Halbwelle des Geschwindigkeitssignals sich anschließenden zweiten Überwachungszeitdauer, und
c) falls während der vorgegebenen zweiten Überwachungszeitdauer ein Wendepunkt des Rucksignals und eine Wiederbeschleunigung des Rads detektiert wird, die dem Fahrzeugrad aufgeprägte Schwingung als bremsdruckinduzierte Schwingung identifiziert und eine Schlupfregelung des Fahrzeugrades nicht durchgeführt wird.

Bei diesem erfindungsgemäßen Verfahren wird davon ausgegangen, dass bei einem harten Bremsantritt mit einem steilen Druckaufbaugradienten eine bremsdruckgradienteninduzierte, also eine bremsdruckinduzierte Schwingung erwartet wird, die von dem Schlupfregelsystem nicht als Schlupf detektiert werden soll und daher hierauf im Sinne einer Schlupfregelung nicht sensibel reagieren darf. Erst wenn sichergestellt ist, dass der detektierte Schlupf nicht auf eine bremsdruckinduzierte Schwingung zurückzuführen ist, kann die Schlupfregelung in betriebsüblicher Weise wieder sensibel anregeln.

Ob eine bremsdruckinduzierte Schwingung vorliegt, wird entsprechend den erfindungsgemäßen Verfahrensschritten a bis c dadurch entschieden, ob das gemessene Radgeschwindigkeitssignal einem erwarteten Signalverlauf entspricht.

Hierzu wird zunächst gemäß Verfahrensschritt a überprüft, ob ein durch einen Bremsantritt initiierter Bremsdruckgradient über eine vorgegebene Schwelle ansteigt, also ein hoher Bremsdruckgradient vorliegt, der zu einer ersten negativen Halbschwingung des Radgeschwindigkeitssignals innerhalb einer ersten Überwachungszeitdauer führen könnte.

Ob eine Detektion einer solchen negativen Halbwelle ein einen Schlupf anzeigenden Geschwindigkeitsabfall darstellt, wird im Anschluss an den Zeitpunkt der detektierten Halbwelle anhand der Kriterien gemäß des Verfahrensschrittes b während einer zweiten Überwachungszeitdauer geprüft. Hierzu wird geprüft, ob das aus dem Radgeschwindigkeitssignal abgeleiteten Rucksignals einen Wendepunkt aufweist und das aus dem Radgeschwindigkeitssignal abgeleitete Beschleunigungssignals den Beginn einer Wiederbeschleunigung anzeigt. Damit wird geprüft, ob der Radbeschleunigungsverlauf während der zweiten Überwachungszeitdauer einen Umkehrpunkt entsprechend einer Sinusschwingung und der Radruckverlauf einen Wendepunkt entsprechend einer Sinusschwingung aufweist. Falls diese Kriterien zutreffen, wird die mit der detektierten negativen Halbwelle beginnende Schwingung des Radgeschwindigkeitssignals als bremsdruckinduzierte Schwingung identifiziert und daher keine Schlupfregelung durchgeführt.

Nach einer vorteilhaften Ausgestaltung der Erfindung wird der Zustand eines Fahrzeugrades hinsichtlich dessen Schwingungszustand dadurch verbessert, dass mit dem Verfahrensschritt b ein aus dem Radgeschwindigkeitssignal und der Fahrzeuggeschwindigkeit ermitteltes Schlupfsignal überwacht wird, und die dem Fahrzeugrad aufgeprägte Schwingung als bremsdruckinduzierte Schwingung identifiziert wird, wenn gemäß Verfahrensschritt c zusätzlich das Schlupfsignal eine vorgegebene Schlupfschwelle nicht erreicht. Damit wird der Schlupfeinlauf während der zweiten Überwachungszeitdauer mit dem Wert eines maximal erwarteten Schlupfes verglichen.

Besonders vorteilhaft ist es, wenn im Falle des Beginns einer negativen Halbwelle während des ersten Überwachungszeitraums die Regelschwellen des Schlupfregelsystems erhöht werden, also auf "unempfindlich" geschaltet, so dass zunächst eine Schlupfregelung unterbleibt.

Nach einer weiteren vorteilhaften Ausgestaltung der Erfindung wird die dem Fahrzeugrad aufgeprägte Schwingung nicht als bremsdruckinduzierte Schwingung identifiziert, wenn während eines vorgegebenen ersten Zeitabschnittes der zweiten Überwachungszeitdauer keine Wiederbeschleunigung des aus dem Radgeschwindigkeitssignal abgeleiteten Beschleunigungssignals detektiert wird. Dieser erste Zeitabschnitt beträgt unter Berücksichtigung einer Signalverzögerung vorzugsweise die Hälfte der zweiten Überwachungszeitdauer.

Des Weiteren wird auch weiterbildungsgemäß die dem Fahrzeugrad aufgeprägte Schwingung nicht als bremsdruckinduzierte Schwingung identifiziert, wenn während eines vorgegebenen zweiten Zeitabschnittes der zweiten Überwachungszeitdauer kein Wendepunkt des aus dem Radgeschwindigkeitssignals abgeleiteten Rucksignals detektiert wird. Dieser zweite Zeitabschnitt ist vorzugsweise kürzer als der erste Zeitabschnitt und beträgt unter Berücksichtigung einer Signalverzögerung bspw. ein Viertel der zweiten Überwachungszeitdauer.

Weiterbildungsgemäß werden die hochgesetzten Regelschwellen wieder auf "empfindlich" zurückgesetzt, wenn die Kriterien gemäß Verfahrensschritt b nicht eintreten.

Schließlich ist nach einer letzten vorteilhaften Ausgestaltung der Erfindung vorgesehen, dass die gemäß Verfahrensschritt a vorgegebene Schwelle in Abhängigkeit des Raddruckes oder eines gefilterten Signals des Raddruckes bestimmt wird. So kann berücksichtigt werden, von welchem aktuellen Druckniveau der Druckaufbaugradient erzeugt wird.

Im Folgenden wird das erfindungsgemäße Verfahren unter Bezugnahme auf die beigefügten Figuren näher erläutert und beschrieben werden. Es zeigen:
- Figur 1: ein t-v-Diagramm zur Erläuterung des erfindungsgemäßen Verfahrens,
- Figur 2: ein t-p-Diagramm zur Erläuterung des erfindungsgemäßen Verfahrens,
- Figur 3: ein t-v/p-Diagramm zur Erläuterung des erfindungsgemäßen Verfahrens, und
- Figur 4: ein t-v/p-Diagramm zur Erläuterung des erfindungsgemäßen Verfahrens.

Im Folgenden wird von einem Fahrzeug mit einem ein Schlupfregelsystem aufweisenden Bremssystem ausgegangen, wobei die Fahrzeugräder von dem Schlupfregelsystem schlupfregelbar sind. Die Fahrzeugräder sind an einem eine Schwingungsdämpfung aufweisenden Radträger aufgehängt, der seinerseits zusammen mit dem Fahrzeugrad gegenüber dem Fahrzeugaufbau beweglich und damit schwingungsfähig ist.

An einem solchen Fahrzeugrad kann Schlupf auftreten, der über eine Differenz zwischen der Radumfangsgeschwindigkeit und der Fahrzeuggeschwindigkeit bestimmt wird. Wie eingangs bereits erwähnt, gibt es Situationen, in denen es zu Fehlanregelungen des Schlupfregelsystems kommen kann, wenn bspw. die Schwingungen in einem Radgeschwindigkeitssignal fälschlicherweise als Schlupf interpretiert werden und das Schlupfregelsystem hierauf mit einer Schlupfregelung reagiert. Insbesondere aufgrund von Schwingungen der Fahrzeugräder in Fahrzeuglängsrichtung, die durch einen schnellen Bremsdruckanstieg initiiert werden können, besteht die Gefahr, dass das Schlupfregelsystem diese Schwingungen fälschlicherweise als Schlupf detektiert.

Daher müssen solche Schwingungen als bremsdruckinduzierte Schwingungen erkannt werden, so dass eine Fehlanregelung durch das Schlupfregelsystem unterbleibt.

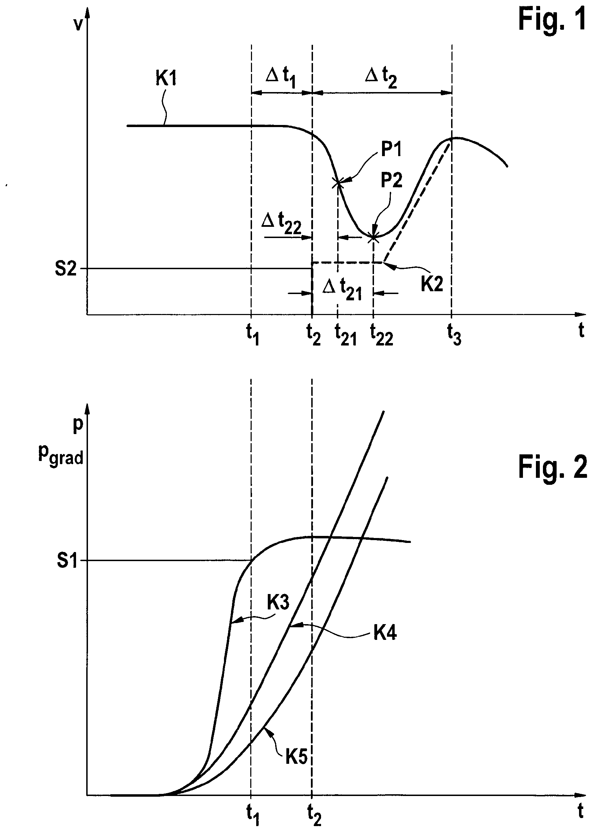

Zur Erkennung solcher bremsdruckinduzierter Schwingungen eines Fahrzeugrades wird das Radgeschwindigkeitssignal verwendet, welches mittels bekannter Radsensorik erzeugt wird. Ein solches Radgeschwindigkeitssignal v ist in Figur 1 als Kurve K1 dargestellt.

Das Verfahren beginnt mit der Überwachung des Verlaufs des in Figur 2 mit der Kurve K3 dargestellten Bremsdruckgradienten p_{grad}. Zu diesem Bremsdruckgradienten p_{grad} gemäß Kurve K3 ist in Figur 2 auch der Verlauf des Radbremsdruckes p als Kurve K4 sowie ein Verlauf des gefilterten Radbremsdruckes p_{f} als Kurve K5 dargestellt.

Überschreitet dieser Bremsdruckgradient p_{grad} zum Zeitpunkt t₁ eine Schwelle S1, welche in Abhängigkeit des gefilterten Bremsdruckes p_{f} bestimmt wird, beginnt mit diesem Zeitpunkt t₁ eine erste Überwachungszeitdauer T₁ von 30 ms. Während dieser ersten Überwachungszeitdauer T₁ wird das Radgeschwindigkeitssignals v hinsichtlich des Beginns einer negativen Halbwelle einer dem Fahrzeugrad aufgeprägten Schwingung überprüft. Gemäß Figur 1 beginnt eine solche Halbwelle des Radgeschwindigkeitssignals v nach einer Zeitdauer Δt₁ im Zeitpunkt t₂. Für diese Zeitdauer Δt₁ gilt: Δt₁ ≤ T₁. Falls während dieser ersten Überwachungszeitdauer T₁ kein Beginn einer negativen Halbwelle detektiert wird, beginnt das Schlupfregelsystem unter Nutzung der systemgemäßen Regelschwellen anzuregeln, da keine störende Schwingung erwartet wird.

Mit der Detektion einer Halbwelle im Zeitpunkt t₂ beginnt eine zweite Überwachungszeitdauer T₂ von 80 ms. Diese zweite Überwachungszeitdauer T₂ dient zur Überprüfung, ob die detektierte Halbwelle auf eine bremsdruckgradienteninduzierte, also bremsdruckinduzierte Schwingung zurückzuführen ist und daher von dem Schlupfregelsystem keine Anregelung wegen eines fälschlicherweise erkannten Schlupfes erfolgen darf.

Durch die Detektion des Starts der negativen Halbwelle wird nun zunächst davon ausgegangen, dass es sich um eine bremsinduzierte Schwingung handelt, die Regelschwellen des Schlupfregelsystems werden deshalb auf "unempfindlich" geschaltet, d. h. sie werden erhöht. Es wird anhand weiterer Kriterien überprüft, ob es sich tatsächlich um eine bremsinduzierte Schwingung handelt, und - falls dem nicht so ist - werden die hochgesetzten Regelschwellen wieder auf ihre normalen Werte, also wieder auf "empfindlich" zurückgeschaltet.

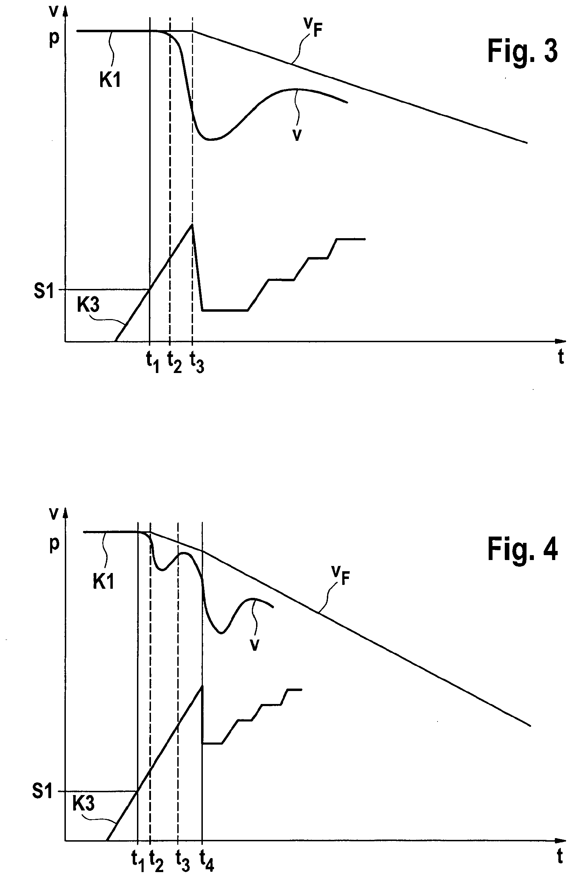

Dieser Fall ist in dem t-v/p-Diagramm nach Figur 3 dargestellt: Wegen des Überschreitens des Schwellwertes S1 zum Zeitpunkt t₁ durch den Bremsdruckgradient p_{grad} (Kurve K3) aufgrund dessen starken Anstiegs beginnt die erste Überwachungszeitdauer T₁. Innerhalb dieser Überwachungszeitdauer T₁ wird zum Zeitpunkt t₂ der Beginn einer negativen Halbwelle des Radgeschwindigkeitssignals v (Kurve K1) detektiert. Ab diesem Zeitpunkt t₂ wird der Regeleintritt des Schlupfregelsystems aufgrund der erhöhten Regelschwellen unterdrückt. Während der sich daran anschließenden zweiten Überwachungszeitdauer T₂, die im Zeitpunkt t₃ endet, werden die weiteren Kriterien nicht detektiert. Somit wird nicht von einer bremsdruckinduzierten Schwingung ausgegangen, sondern von einem tatsächlich vorliegenden Schlupf. Damit beginnt mit dem Zeitpunkt t₃ die Schlupfregelung mit den wieder herabgesetzten, also den empfindlichen Regelschwellen.

Ob nach der Detektion einer negativen Halbwelle eine bremsdruckinduzierte Schwingung vorliegt, wird überprüft, ob während dieser zweiten Überwachungszeitdauer T₂ das Radgeschwindigkeitssignal v einen Wendepunkt eines aus dem Radgeschwindigkeitssignal abgeleiteten Rucksignals und den Beginn eines die Wiederbeschleunigung anzeigenden, aus dem Radgeschwindigkeitssignal abgeleiteten Beschleunigungssignals anzeigt. Zusätzlich wird ein aus dem Radgeschwindigkeitssignal v und der Fahrzeuggeschwindigkeit des Fahrzeugs ermitteltes Schlupfsignal K2 (vgl. Figur 1) mit dem Wert eines maximal erwarteten Schlupfes, nämlich mit einer Schlupfschwelle S2 verglichen.

Diese genannten Kriterien zur Erkennung einer bremsdruckinduzierten Schwingung des Radgeschwindigkeitssignals v sind gemäß Figur 1 erfüllt. So werden zum Zeitpunkt t₂₁ ein Wendepunkt P1 (entsprechend eines Wendepunktes einer Sinusschwingung) des aus dem Radgeschwindigkeitssignal v abgeleiteten Rucksignals j und anschließend zum Zeitpunkt t₂₂ ein Umkehrpunkt P2 (entsprechend eines Umkehrpunktes einer Sinusschwingung) detektiert, wobei der Umkehrpunkt P2 den Beginn der Wiederbeschleunigung des aus dem Radgeschwindigkeitssignal v abgeleiteten Beschleunigungssignals anzeigt. Schließlich erreicht der Schlupf K2 nicht die vorgegebene Schlupfschwelle S2.

Damit ist sichergestellt, dass die in der ersten Überwachungszeitdauer T₁ aufgetretene negative Halbwelle des Radgeschwindigkeitssignals v bremsinduziert ist und daher eine Bremsschlupfregelung des Schlupfregelsystems unterbleibt.

Diesen Fall zeigt auch das t-v/p-Diagramm nach Figur 4: Wegen des Überschreitens des Schwellwertes S1 zum Zeitpunkt t₁ durch den Bremsdruckgradient p_{grad} (Kurve K3) aufgrund dessen starken Anstiegs beginnt die erste Überwachungszeitdauer T₁. Innerhalb dieser Überwachungszeitdauer T₁ wird zum Zeitpunkt t₂ der Beginn einer negativen Halbwelle des Radgeschwindigkeitssignals v detektiert. Ab diesem Zeitpunkt t₂ wird der Regeleintritt des Schlupfregelsystems aufgrund der erhöhten Regelschwellen unterdrückt. Während der sich daran anschließenden zweiten Überwachungszeitdauer T₂, die im Zeitpunkt t₃ endet wird sowohl ein Wendepunkt und ein Umkehrpunkt detektiert. Somit wird von einer bremsdruckinduzierten Schwingung ausgegangen. Erst in der nächsten Halbwelle zum Zeitpunkt t₄ beginnt die normale Schlupfregelung. In diesem Diagramm nach Figur 4 ist auch der Verlauf der Fahrzeuggeschwindigkeit v_{F} eingetragen.

Werden einer der genannten drei Kriterien während der zweiten Überwachungszeitdauer T₂ nicht erfüllt, geht das Schlupfregelsystem davon aus, dass ein Schlupf vorliegt. Die in Figur 1 dargestellte Halbwelle des Radgeschwindigkeitssignals v geht im Zeitpunkt t₂₂ in eine positive Halbwelle über, die im Zeitpunkt t₃ endet. Die Zeitdauer Δt₂ zwischen den beiden Zeitpunkten t₂ und t₃ entspricht höchstens der zweiten Überwachungszeitdauer T₂.

Auch wird die dem Fahrzeugrad aufgeprägte Schwingung dann nicht als bremsdruckinduzierte Schwingung identifiziert, wenn während eines vorgegebenen ersten Zeitabschnittes T₂₁ der zweiten Überwachungszeitdauer T₂ keine Wiederbeschleunigung des aus dem Radgeschwindigkeitssignal abgeleiteten Beschleunigungssignals detektiert wird. Dieser erste Zeitabschnitt T₂₁ beträgt unter Berücksichtigung einer Signalverzögerung vorzugsweise die Hälfte der zweiten Überwachungszeitdauer T₂. Gemäß Figur 1 tritt diese Wiederbeschleunigung des Fahrzeugrades im Punkt P2, also im Anschluss an den Zeitpunkt t₂ nach einer Zeitdauer Δt₂₁=t₂₂-t₂ auf, für die Δt₂₁ ≤ T₂₁ gilt.

Des Weiteren wird auch die dem Fahrzeugrad aufgeprägte Schwingung nicht als bremsdruckinduzierte Schwingung identifiziert, wenn während eines vorgegebenen zweiten Zeitabschnittes T₂₂ der zweiten Überwachungszeitdauer T₂ kein Wendepunkt P1 des aus dem Radgeschwindigkeitssignals v abgeleiteten Rucksignals j detektiert wird. Dieser zweite Zeitabschnitt T₂₂ ist kürzer als der erste Zeitabschnitt T₂₁ und beträgt unter Berücksichtigung einer Signalverzögerung ein Viertel der zweiten Überwachungszeitdauer T₂. Gemäß Figur 1 erfüllt die Zeitdifferenz Δt₂₂=t₂₁-t₂ zwischen dem Wendepunkt P1 und dem Zeitpunkt t₂ die Bedingung: Δt₂₂ ≤ T₂₂.

## Patentansprüche

1. Verfahren zur Vermeidung von Fehlanregelungen eines Schlupfregelsystems eines Bremssystems eines Fahrzeugs, bei welchem an wenigstens einem Fahrzeugrad eine Schlupfregelung durchführbar ist,
mit den Schritten:
- Überwachen eines Radgeschwindigkeitssignals (v) für eine vorgegebene Überwachungszeitdauer hinsichtlich des Beginns einer negativen Halbwelle einer dem Fahrzeugrad aufgeprägten Schwingung und
- falls während der Überwachungszeitdauer eine Schwingung identifiziert und eine Schlupfregelung des Fahrzeugrades nicht durchgeführt wird,
**gekennzeichnet durch** die Schritte:
a) Überwachen des Radgeschwindigkeitssignals (v) für eine vorgegebene erste Überwachungszeitdauer (T₁) hinsichtlich des Beginns einer negativen Halbwelle einer dem Fahrzeugrad aufgeprägten Schwingung, falls ein durch einen Bremsantritt initiierter Bremsdruckgradient (p_{grad}) über eine vorgegebene Schwelle (S1) ansteigt,
b) Überwachen des Radgeschwindigkeitssignals (v) hinsichtlich eines Wendepunktes (P1) eines aus dem Radgeschwindigkeitssignals (v) abgeleiteten Rucksignals (j) und des Beginns eines die Wiederbeschleunigung anzeigenden, aus dem Radgeschwindigkeitssignal (v) abgeleiteten Beschleunigungssignals während einer vorgegebenen, an den Zeitpunkt (t₁) des Beginns einer detektierten negativen Halbwelle des Geschwindigkeitssignals (v) sich anschließenden zweiten Überwachungszeitdauer (T₂), und
c) falls während der vorgegebenen zweiten Überwachungszeitdauer (T₂) ein Wendepunkt (P1) des Rucksignals (j) und eine Wiederbeschleunigung des Rads detektiert wird, die dem Fahrzeugrad aufgeprägte Schwingung als bremsdruckinduzierte Schwingung identifiziert und eine Schlupfregelung des Fahrzeugrades nicht durchgeführt wird.

2. Verfahren nach Anspruch 1, **dadurch gekennzeichnet dass**, mit dem Verfahrensschritt b ein aus dem Radgeschwindigkeitssignal (v) und der Fahrzeuggeschwindigkeit ermitteltes Schlupfsignal (K2) überwacht wird, und die dem Fahrzeugrad aufgeprägte Schwingung als bremsdruckinduzierte Schwingung identifiziert wird, wenn gemäß Verfahrensschritt c zusätzlich das Schlupfsignal (K2) eine vorgegebene Schlupfschwelle (S2) nicht erreicht.

3. Verfahren nach Anspruch 1 oder 2, **dadurch gekennzeichnet, dass** bei einer Detektion einer negativen Halbwelle die Regelschwellen des Schlupfregelsystems erhöht werden.

4. Verfahren nach Anspruch 1,2 oder 3, **dadurch gekennzeichnet, dass** die dem Fahrzeugrad aufgeprägte Schwingung nicht als bremsdruckinduzierte Schwingung identifiziert wird, wenn während eines vorgegebenen ersten Zeitabschnittes (T₂₁) der zweiten Überwachungszeitdauer (T₂) keine Wiederbeschleunigung des aus dem Radgeschwindigkeitssignal (v) abgeleiteten Beschleunigungssignals detektiert wird.

5. Verfahren nach einem der vorhergehenden Ansprüche, **dadurch gekennzeichnet, dass** die die dem Fahrzeugrad aufgeprägte Schwingung nicht als bremsdruckinduzierte Schwingung identifiziert wird, wenn während eines vorgegebenen zweiten Zeitabschnittes (T₂₂) der zweiten Überwachungszeitdauer (T₂) kein Wendepunkt (P1) des aus dem Radgeschwindigkeitssignals (v) abgeleiteten Rucksignals (j) detektiert wird.

6. Verfahren nach Anspruch 4 oder 5, **dadurch gekennzeichnet, dass** bei Nichterkennung einer bremsdruckinduzierten Schwingung die Regelschwellen zurückgesetzt werden.

7. Verfahren nach Anspruch 4, 5 oder 6, **dadurch gekennzeichnet, dass** der zweite Zeitabschnitt (T₂₂) kürzer als der erste Zeitabschnitt (T₂₁) ist.

8. Verfahren nach einem der Ansprüche 4 bis 7, **dadurch gekennzeichnet, dass** unter Berücksichtigung einer Signalverzögerung der erste Zeitabschnitt (T₂₁) der Hälfte der zweiten Überwachungszeitdauer (T₂) entspricht.

9. Verfahren nach einem der Ansprüche 4 bis 8, **dadurch gekennzeichnet, dass** unter Berücksichtigung einer Signalverzögerung der zweite Zeitabschnitt (T₂₂) einem Viertel der zweiten Überwachungszeitdauer (T₂) entspricht.

10. Verfahren nach einem der vorhergehenden Ansprüche, **dadurch gekennzeichnet, dass** die gemäß Verfahrensschritt a vorgegebene Schwelle (S1) in Abhängigkeit des Raddruckes (p) oder eines gefilterten Signals (p_{f}) des Raddruckes (p) bestimmt wird.

## Claims

1. Method for avoiding false excitations of a slip control system of a brake system of a vehicle, in which slip control can be performed on at least one vehicle wheel,
having the steps:
- monitoring of a wheel speed signal (v) for a predetermined monitoring period in respect of the start of a negative half-wave of an oscillation imposed on the vehicle and
- if during the monitoring period an oscillation is identified and a slip control of the vehicle wheel is not carried out,
**characterized by** the steps:
a) monitoring of the wheel speed signal (v) for a predetermined first monitoring period (T₁) in respect of the start of a negative half-wave of an oscillation imposed on the vehicle wheel if a brake pressure gradient (p_{grad}) initiated by a brake application rises above a predetermined threshold (S1),
b) monitoring of the wheel speed signal (v) in respect of a turning point (P1) of a ruck signal (j) derived from the wheel speed signal (v) and of the start of an acceleration signal indicating the re-acceleration and derived from the wheel speed signal (v) during a predetermined second monitoring period (T₂) following the point in time (t₁) of the start of a detected negative half-wave of the speed signal (v), and
c) if during the predetermined second monitoring period (T₂) a turning point (P1) of the ruck signal (j) and a re-acceleration of the wheel are detected, the oscillation imposed on the vehicle wheel is identified as a braking-induced vibration and slip control of the vehicle wheel is not carried out.

2. Method according to Claim 1, **characterized in that** with step b of the method a slip signal (K2) determined from the wheel speed signal (v) and the speed of the vehicle is monitored, and the oscillation imposed on the vehicle wheel is identified as a braking-induced vibration if in addition according to step c of the method the slip signal (K2) does not reach a predetermined slip threshold (S2).

3. Method according to Claim 1 or 2, **characterized in that** in the event of the detection of a negative half-wave, the control thresholds of the slip control system are increased.

4. Method according to Claim 1, 2 or 3, **characterized in that** the oscillation imposed on the vehicle wheel is not identified as a braking-induced vibration if no re-acceleration of the acceleration signal derived from the wheel speed signal (v) is detected during a predetermined first time segment (T₂₁) of the second monitoring period (T₂).

5. Method according to any one of the preceding claims, **characterized in that** the oscillation imposed on the vehicle wheel is not identified as a braking-induced vibration if no turning point (P1) of the ruck signal (j) derived from the wheel speed signal (v) is detected during a predetermined second time segment (T₂₂) of the second monitoring period (T₂) .

6. Method according to Claim 4 or 5, **characterized in that** the control thresholds are reset if a braking-induced vibration is not identified.

7. Method according to claim 4, 5 or 6, **characterized in that** the second time segment (T₂₂) is shorter than the first time segment (T₂).

8. Method according to any one of Claims 4 to 7, **characterized in that** taking into account a signal delay, the first time segment (T₂₁) corresponds to half of the second monitoring period (T₂).

9. Method according to any one of Claims 4 to 8, **characterized in that** taking into account a signal delay, the second time segment (T₂₂) corresponds to a quarter of the second monitoring period (T₂).

10. Method according to any one of the preceding claims, **characterized in that** the threshold (S1) predetermined according to step a of the method is determined as a function of the wheel pressure (p) or of a filtered signal (p_{f}) of the wheel pressure (p).

## Revendications

1. Procédé pour éviter des erreurs de régulation d'un système de régulation du patinage d'un système de freinage d'un véhicule, avec lequel une régulation du patinage peut être effectuée au niveau d'au moins une roue de véhicule,
comprenant les étapes suivantes :
- surveillance d'un signal de vitesse de roue (v) pendant une durée de surveillance prédéfinie concernant le début d'une demi-onde négative d'une oscillation imprimée à la roue de véhicule et
- si une oscillation est identifiée pendant la durée de régulation et une régulation du patinage de la roue de véhicule n'est pas effectuée,
**caractérisé par** les étapes suivantes :
a) surveillance du signal de vitesse de roue (v) pendant une première durée de surveillance (T₁) prédéfinie concernant le début d'une demi-onde négative d'une oscillation imprimée à la roue de véhicule dans le cas où un gradient de pression de freinage (p_{grad}) initié par une entrée en fonction du freinage augmente au-dessus d'un seuil (S1) prédéfini,
b) surveillance du signal de vitesse de roue (v) concernant un point de retournement (P1) d'un signal de retour (j) dérivé du signal de vitesse de roue (v) et le début d'un signal d'accélération dérivé du signal de vitesse de roue (v), indiquant la réaccélération, pendant une deuxième durée de surveillance (T₂) prédéfinie qui se rattache à l'instant (t₁) du débit d'une demi-onde détectée du signal de vitesse (v), et
c) si un point de retournement (P1) du signal de retour (j) et une réaccélération de la roue sont détectés pendant la deuxième durée de surveillance (T₂) prédéfinie, l'oscillation imprimée à la roue de véhicule est identifiée comme une oscillation induite par la pression de freinage et la régulation du patinage de la roue de véhicule n'est pas effectuée.

2. Procédé selon la revendication 1, **caractérisé en ce que** l'étape b) du procédé réalise une surveillance d'un signal de patinage (K2) déterminé à partir du signal de vitesse de roue (v) et de la vitesse du véhicule, et l'oscillation imprimée à la roue de véhicule est identifiée comme une oscillation induite par la pression de freinage si en plus de cela, selon l'étape c) du procédé, le signal de patinage (K2) n'atteint pas un seuil de patinage (S2) prédéfini.

3. Procédé selon la revendication 1 ou 2, **caractérisé en ce que** lors d'une détection d'une demi-onde négative, les seuils de régulation du système de régulation du patinage sont augmentés.

4. Procédé selon la revendication 1, 2 ou 3, **caractérisé en ce que** l'oscillation imprimée à la roue de véhicule n'est pas identifiée comme une oscillation induite par la pression de freinage si, pendant une première portion de temps (T₂₁) prédéfinie de la deuxième durée de surveillance (T₂), aucune réaccélération du signal d'accélération dérivé du signal de vitesse de roue (v) n'est détectée.

5. Procédé selon l'une des revendications précédentes, **caractérisé en ce que** l'oscillation imprimée à la roue de véhicule n'est pas identifiée comme une oscillation induite par la pression de freinage si, pendant une deuxième portion de temps (T₂₂) prédéfinie de la deuxième durée de surveillance (T₂), aucun point de retournement (P1) du signal de retour (j) dérivé du signal de vitesse de roue (v) n'est détecté.

6. Procédé selon la revendication 4 ou 5, **caractérisé en ce qu'**en cas d'absence de reconnaissance d'une oscillation induite par le freinage, les seuils de régulation sont réinitialisés.

7. Procédé selon la revendication 4, 5 ou 6, **caractérisé en ce que** la deuxième portion de temps (T₂₂) est plus courte que la première portion de temps (T₂₁).

8. Procédé selon l'une des revendications 4 à 7, **caractérisé en ce qu'**en tenant compte d'un retard du signal, la première portion de temps (T₂₁) correspond à la moitié de la deuxième durée de surveillance (T₂).

9. Procédé selon l'une des revendications 4 à 8, **caractérisé en ce qu'**en tenant compte d'un retard du signal, la deuxième portion de temps (T₂₂) correspond à un quart de la deuxième durée de surveillance (T₂).

10. Procédé selon l'une des revendications précédentes, **caractérisé en ce que** le seuil (S1) prédéfini selon l'étape a) du procédé est déterminée en fonction d'une pression de roue (p) ou d'un signal filtré (p_{f}) de la pression de roue (p).
